# EUROPÄISCHE PATENTSCHRIFT

(11) **EP 1 045 507 B1**
(45) Veröffentlichungstag und Bekanntmachung des Hinweises auf die Patenterteilung: **10.12.2003**
(21) Anmeldenummer: 00108339.3
(22) Anmeldetag: 14.04.2000
(51) Int. Cl.: H02K 7/08, H02K 5/173, H02K 21/24, H02K 26/00, F16C 19/54, F16C 19/14

(54) **Scheibenläufermotor mit drehgelagerter Läuferscheibe**
Disk motor with rotatably mounted rotor disk
Moteur à rotor en forme de disque avec disque monté à rotation

(30) Priorität: 16.04.1999 DE 19917408
(43) Veröffentlichungstag der Anmeldung: 18.10.2000
(73) Patentinhaber: BAUMÜLLER NÜRNBERG GMBH, D-90482 Nürnberg (DE)
(72) Erfinder: Richter, Axel, Dipl.-Ing., 37627 Stadtolendorf (DE)
(74) Vertreter: Götz, Georg, Dipl.-Ing.

(56) Entgegenhaltungen:
- EP-A- 0 561 437
- EP-A- 0 894 880
- DE-A- 2 908 017
- US-A- 4 853 567
- US-A- 5 216 339

## Beschreibung

Die Erfindung betrifft einen elektrischen Scheibenläufermotor mit einer Läuferscheibe, die gegenüber einem Stator und/oder einem Motorgehäuse drehbar gelagert ist, gemäß Oberbegriff des Patentanspruchs 1.

Bei bekannten Scheibenläufermotoren etwa dieser Art ist die Läuferscheibe auf einer Drehachse montiert, die zu beiden Stirnseiten der Läuferscheibe von Rillenkugellagern umfaßt ist. Diese beiden Rillenkugellager-Einheiten benötigen innerhalb des Motorgehäuses jeweils entsprechenden Einbauplatz, was die Baugröße und vor allem die axiale Länge des Motors erhöht. Zudem sind die Rillenkugellager zur kombinierten Aufnahme radialer und axialer Kräfte nicht optimal. Ferner wird noch auf den aus GB 1207 883 bekannten Scheibenläufermotor mit zwei Drehlagern auf unterschiedlichen Stirnseiten verwiesen. Der Lagertyp ist nicht näher spezifiert.

EP-A-0 894 880 beschreibt einen Rotationskanten-Dreher mit elektromagnetischem Direkt-Antrieb für Webmaschinen, wobei zwischen dem Rotor und dem Stator ein axialer Magnetfluß besteht. Der Rotor besteht aus einer Dreherscheibe mit Fadenführungen, mehreren auf der Ringfläche der Dreherscheibe angeordneten Permanentmagneten, aus einem Meßsystem und aus dem Lagerring eines Wälzlagers. Der Lagerring des Wälzlagers ist über einen Montagering und mehreren den Montagering mit dem Gehäuse verbindenden Schrauben drehfest in dem Statorgehäuse aufgenommen. Es wird der Einsatz eines Axialwälzlagers oder eines Radialwälzlagers vorgeschlagen.

Gemäß US-A-5 216 339 ist bei einem Scheibenläufermotor die Läuferscheibe an eine Welle befestigt, welche beidseitig der Läuferscheibe von Kugellagern in Rillenbauweise getragen wird. Die genannte (Abtriebs-) Welle bildet einen zentrisch verlaufenden Vorsprung.

US-A-4 853 567 offenbart einen elektrischen Direktantriebsmotor in AußenläuferBauweise. Der Außenläufer wird mittels eines Kreuzrollenlagers drehbar gehalten, wodurch radiale, axiale Lasten sowie Drehmoment-Belastungen gleichzeitig aufgenommen werden sollen.

Aufgabe der Erfindung ist es, die Nachteile des Standes der Technik zu mildem. Zur Lösung wird der Scheibenläufermotor mit den im Anspruch 1 angegebenen Merkmalen vorgeschlagen. Vorteilhafte Ausgestaltungen der Erfindung ergeben sich aus den abhängigen Ansprüchen.

Mit der Erfindung läßt sich ein Scheibenläufermotor schaffen, der sich durch eine axial kurze Baulänge und gegebenenfalls durch eine hohe Steifigkeit und Belastbarkeit seines Abtriebsorgans gegenüber Kräften aus allen Richtungen auszeichnet.

Kreuzrollenlager sind an sich auf dem Markt unter der Typenbezeichnung z. B. RA/RB/RE von THK GmbH, Hubert-Eollenberg-Str. 15, 40876 Ratingen bekannt. Da bei derartigen Lagern die Rollen rechtwinklig versetzt angeordnet sind, können Belastungen von einem Lager in allen Richtungen (sowohl radial als auch axial) aufgenommen werden. Im Vergleich zu doppelreihig angeordneten kompakten Schrägkugellagern ist die Steifigkeit um den Faktor 3 - 4 größer. Da zudem sich diese Lagerart als Dünnringlager realisieren läßt, wird für deren Einbau wenig Platz benötigt, was für den entsprechenden Scheibenläufermotor zu einer kompakten Bauform führt.

Bei einreihigen Schrägkugellagern sind die Laufbahnen so angeordnet, dass die Kräfte unter einem bestimmten Druckwinkel - d. h. schräg zur Radialebene - von einer Laufbahn auf die andere übertragen werden. Es gibt Reihen mit 15°, 25° und 40° Druckwinkel. Wegen ihres Druckwinkels sind Schrägkugellager für die Aufnahme größerer Axialkräfte besser geeignet als Rillenkugellager. Zweireihige Schrägkugellager entsprechen in ihrem Aufbau einem Paar einreihiger Schrägkugellager in O-Anordnung. Zweireihige Schrägkugellager können hohe radiale und axiale Kräfte aufnehmen.

Vierpunktlager haben am Innenring und am Außenring je zwei kreisbogenförmige Laufbahnen, deren Krümmungsmittelpunkte so gegeneinander versetzt sind, dass die Kugeln die Laufringe bei radialer Belastung in vier Punkten berühren. Die Lager sind für wechselnde, rein axiale Belastung oder überwiegende Axiallast geeignet. Dabei berühren die Kugeln den Innen- und Außenring nur an je einem Punkt, wie in einem axial belasteten einreihigen Schrägkugellager. Die Druckwinkel des Vierpunktlagers sind groß (gewöhnlich 35°). Es kann daher hohe axiale Kräfte in beiden Richtungen aufnehmen. Entsprechend besteht eine vorteilhafte Ausbildung der Erfindung darin, dass ein Vierpunktlager verwendet und als Dünnringlager ausgeführt ist.

Das Nadellager ist eine Zylinderrollenlager-Variante mit dünnen, langen Rollkörpem und ist nur radial belastbar. Nadellager haben Nadelrollen mit einem Verhältnis Durchmesser : Länge zwischen 1:2,5 und 1:10. Nadellager haben eine sehr geringe Bauhöhe; sie eignen sich daher besonders für den Leichtbau und für Konstruktionen, bei denen der Einbauraum in radialer Richtung begrenzt ist. Radial-Nadellager können nur als Loslager verwendet werden. Für Fälle, in denen auch Axialkräfte aufgenommen werden müssen, gibt es kombinierte Nadel-Kugellager, Radial-Axiallager als Kombination eines Radial-Nadellagers mit einem Axial-Rillenkugellager, einem Schrägkugellager, einem Axial-Zylinderrollenlager oder einem Axial-Nadellager.

Auf der Basis der allgemeinen erfinderischen Idee eröffnet sich die besonders vorteilhafte Ausbildung, bei der die Motor-Läuferscheibe an ihrem Umfang bzw. ihrer Peripherie vom drehbaren Innenring einer Lagereinheit umfaßt oder umgriffen ist, während der komplementäre Außenring am Stator und/oder Motorgehäuse fixiert ist. Damit ist es möglich, daß die Drehführung der Läuferscheibe mit einer einzigen Lager-Baueinheit in Form eines der genannten Lager auskommt, und gleichwohl aufgrund von dessen spezifischen Eigenschaften die Belastbarkeit sowohl mit radialen als auch axialen Kräften in hohem Ausmaß ermöglicht.

Die Erfindung beruht auf der Verwendung eines Motorgehäuses mit einer offenen Gehäuse-Topfform, wobei die Mantelwandung parallel zur Motor-Drehachse und der Bodenteil quer zur Motor-Drehachse verläuft. Die offene Stirnseite des Gehäusetopfes ist von einem Innenring des erfindungsgemäßen Lagers umgeben bzw. definiert, worin die Läuferscheibe mit nach außen weisender oder von außen zugänglicher Stirnseite aufgenommen ist. Vor allem mit dem letzten Gesichtspunkt wird der Vorteil einer erhöhten Funktionalität erzielt: Die Läuferscheibe ist auf ihrer von außen frei zugänglichen Stirnseitenfläche mit einer exzentrisch angeordneten Abtriebswelle versehen, der eine Anwendung des Scheibenläufermotors beispielsweise als Schwenkantrieb ermöglicht. Zusätzlich kann auf der von außen frei zugänglichen Stirnseitenfläche der Läuferscheibe ein zentrisch angeordneter Abtriebswellenstumpf ausgebildet sein, der wegen der an sich außerordentlich kurzen Motorbauhöhe in vielfältigen Einbauumgebungen in Angriff gebracht werden kann. Daneben kann auch eine Winkellageregelung unter direkter Abtastung der Winkellage der Läuferscheibe konstruktiv einfach dadurch realisiert werden, daß auf der von außen zugänglichen Stirnseite der Läuferscheibe ein etwa kreisbogenartig verlaufendes Strichcodesegment aufgebracht ist, das mit einem Leseorgan eines Winkelgebers, insbesondere eines an sich bekannten Encoders in Wirkverbindung steht. So läßt sich ein winkellagegeregelter Scheibenläufermotor niedriger Bauhöhe und hoher mechanischer Belastbarkeit am Abtriebsorgan realisieren, was vor allem die Einsatzvielfalt und die Positioniergenauigkeit weiter erhöht.

Im Rahmen der Erfindung läßt sich die Läuferscheibe nicht nur als Träger für Abtriebselemente oder - organe sowie Sensorelemente, sondern auch als Träger für Dauermagnetsegmente mit Weicheisen-Rückschlußplatte auf der dem Luftspalt bzw. dem Stator zugewandten Stirnseitenfläche einsetzen. Durch die Verwendung der genannten Drehlagerungen, beispielsweise eines einzigen Kreuzrollenlagers, welches die Läuferscheibe peripher umfaßt, läßt sich die Anwendungsbreite der Läuferscheibe und damit des gesamten Scheibenläufermotors aufgrund der erzielbaren Verkürzung der Bauhöhe vervielfachen.

Weitere Vorteile, Einzelheiten, Merkmale und Wirkungen auf der Basis der Erfindung ergeben sich aus der nachfolgenden Beschreibung eines bevorzugten Ausführungsbeispiels der Erfindung und den Zeichnungen. Diese zeigen in:
Figur 1 den erfindungsgemäßen Scheibenläufermotor im axialen Längsschnitt
Figur 2 eine Stirnansicht gemäß Richtung II in Figur 1.

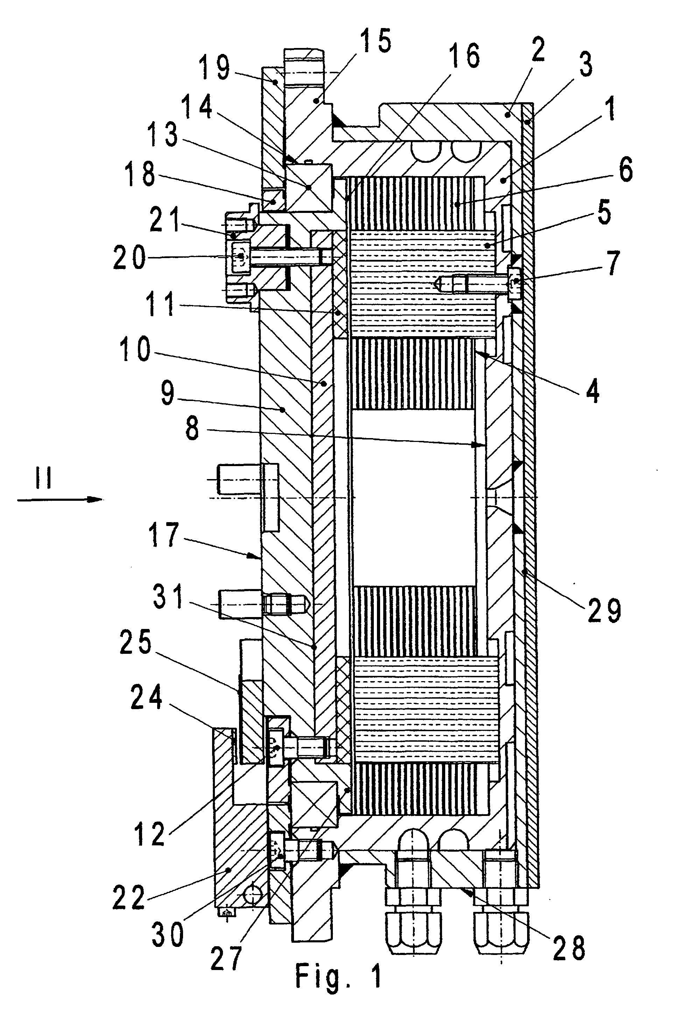

Gemäß Figur 1 ist in einem Motorgehäuse mit einem Innenteil 1, einem Außenteil 2, und einem stirnseitigem Deckelteil 3 ein Stator 4 mit Eisenkempaketen 5 und Wickelköpfen 6 über mehrere Zylinderschrauben 7 fixiert. Die quer zur Motor-Drehachse und parallel zum Deckelteil 3 verlaufende Innenseite des Gehäuse-Innenteils 1 bildet gleichsam den Topfboden 8 der Gehäusetopfform, welcher der Topföffnung gegenüberliegt. Letztere ist ausgefüllt von einer Läuferscheibe 9, welche auf ihrer innenseitigen Stirnfläche über eine magnetische Weicheisen-Rückschlußplatte 10 Dauermagnetelemente 11 in peripherer Lage trägt. Letztere sind auf der Rückschlußplatte 10 fixiert, die mit dem Grundkörper der Läuferscheibe 9 über Zylinderschrauben 12 und Kleber 31 fest verbunden ist. Der Drehführung der Läuferscheibe 9 dient eines der erfindungsgemäß spezifischen Lagereinheiten 13, welche die Öffnung des Gehäusetopfes 1, 2, 3 umgrenzt und mit seinem (nicht detailliert dargestellten) rotierbaren Innenring die äußere Umfangsseite der Läuferscheibe 9 umfaßt. Mit seinem (nicht gezeichneten) Außenring ist die Lagereinheit 13 am innenseitigen Öffnungsrand 14 fest abgestützt, welcher von einem Stirnflansch 15 des Gehäusetopfs 1, 2, 3 gebildet wird. Bei dieser Anordnung ist die dem Luftspalt 16 zwischem dem Stator 4 und den Dauermagnetelementen 11 abgewandte Stirnseite 17 der Läuferscheibe 9 von außen frei zugänglich. Mittels eines inneren und eines äußeren Lagerhalterings 18, 19 ist die Lagereinheit 13 über Zylinderschrauben 12 und 30 axial fixiert.

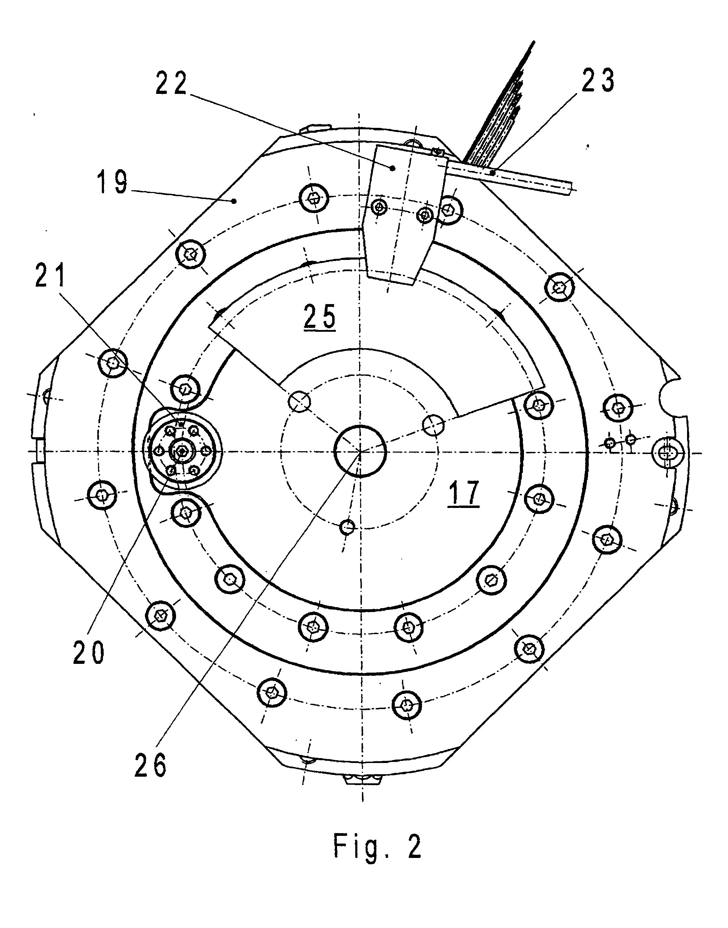

Gemäß Figuren 1 und 2 kann die freie Zugänglichkeit der dem Luftspalt 16 abgewandten Läufer-Stirnseite 17 zur Anbringung diverser, zu bewegender Funktionselemente ausgenutzt werden. So ist mittels einer Zylinderschraube 20 ein exzentrischer Abtriebsvorsprung 21 ("exzentrische Welle") auf der Außenfläche der freien Läufer-Stirnseite 17 peripher bzw. im Bereich des Umfangsrandes montiert. Der Abtriebsvorsprung 21 kann beispielsweise für einen Schwenkantrieb eingesetzt werden. Ferner ist für einen Winkelgeber 22 mit Anschlußkabel 23 und Strichcode-Lesekopf 24 ein Strichcodesegment 25 mit kreisbogenförmiger Grundform konzentrisch zur Mittelachse bzw. Motor-Drehachse 26 auf die freie Läufer-Stirnseite 17 aufgebracht. Dadurch kann die Läuferscheibe in ihrer Winkellage geregelt eingestellt werden und insbesondere für einen geregelten Schwenkantrieb in Verbindung mit dem zentrischen Abtriebsvorsprung 21 verwendet werden.

### Bezugszeichen-Liste

- 1 -: Gehäuse-Innenteil
- 2 -: Gehäuse-Außenteil
- 3 -: Gehäuse-Deckelteil
- 4 -: Stator
- 5 -: Eisenkernpaket
- 6 -: Wickelkopf
- 7 -: Zylinderschraube
- 8 -: Topfboden
- 9 -: Läuferscheibe
- 10 -: Weicheisen-Rückschlußplatte
- 11 -: Dauermagnetelemente
- 12 -: Zylinderschraube
- 13 -: Lagereinheit
- 14 -: Öffnnungsrand
- 15 -: Stirnflansch
- 16 -: Luftspalt
- 17 -: freie Läufer-Stirnseite
- 18 -: innerer Lagerhaltering
- 19 -: äußerer Lagehaltering
- 20 -: Zylinderschraube
- 21 -: exzentrischer Abtriebsvorsprung
- 22 -: Winkelgeber
- 23 -: Anschlußkabel
- 24 -: Lesekopf
- 25 -: Strichcodesegment
- 26 -: Mittelachse
- 27 -: Außenrand
- 28 -: Mantelwandung
- 29 -: Bodenteil
- 30 -: Zylinderschraube
- 31 -: Kleber

## Patentansprüche

1. Elektrischer Scheibenläufermotor mit einer drehgelagerten Läuferscheibe (9), die gegenüber einem Stator (4) und/oder einem Motorgehäuse (1,2,3) drehbar gelagert ist, wobei als Drehlagerung (13) für die Läuferscheibe (9) ein oder mehrere Dünnringlager, Kreuzrollenlager, Vierpunktlager, Nadellager oder Schrägkugellager oder eine Kombination aus diesen angeordnet sind, und das Motorgehäuse (1,2,3) die Form eines offenen Gehäusetopfs mit einer Mantelwandung (28) parallel zur Motor-Drehachse (26) und einem Bodenteil (29) quer zur Motor-Drehachse (26) aufweist, und die Gehäusetopf-Öffnung von einem Innenring der Drehlagerung (13) umgrenzt ist, und die Läuferscheibe (9) mit einer nach außen weisenden oder von außen zugänglichen Stirnseite (17) angeordnet ist, **dadurch gekennzeichnet, dass** die Läuferscheibe (9) in dem Drehlager-Innenring aufgenommen ist, dabei mit ihrem Außenrand (27) gegen den drehbaren Innenring fest anliegt und auf ihrer nach außen weisenden Stirnseite (17) einen exzentrisch angeordneten Abtriebsvorsprung (21) oder eine exzentrisch angeordnete Abtriebswelle jeweils für einen Schwenkantrieb aufweist.

2. Motor nach Anspruch 1, **gekennzeichnet durch** die Anordnung einer einzigen Drehlagerung (13) mit einem am Motorgehäuse (1,2,3) fixierten Außenring und einem drehbaren Innenring, von welchem die Läuferscheibe (9) umfaßt ist.

3. Motor nach Anspruch 1 oder 2, **dadurch gekennzeichnet, daß** die Läuferscheibe (9) auf ihrer nach außen weisenden Stirnseite (17) eine zentrisch angeordnete Abtriebswelle aufweist.

4. Motor nach einem der vorangehenden Ansprüche, **dadurch gekennzeichnet, daß** die Läuferscheibe (9) auf ihrer nach außen weisenden Stirnseite (17) ein exzentrisch angeordnetes, kreisbogenartig verlaufendes Strichcodesegment (25) aufweist, die einem ortsfest vorzugsweise am Motorgehäuse (1,2,3) abgestützten Leseorgan (24) eines Winkelgebers (22) zugeordnet ist.

5. Motor nach einem der vorangehenden Ansprüche, **dadurch gekennzeichnet, daß** die Läuferscheibe (9) auf ihrer an einem Luftspalt (16) zum Stator (4) angrenzenden Stirnseite mehrere Dauermagnete (11) trägt.

6. Motor nach einem der vorangehenden Ansprüche, **dadurch gekennzeichnet, dass** das Vierpunktlager als Dünnringlager ausgeführt ist.

7. Motor nach einem der vorangehenden Ansprüche, **dadurch gekennzeichnet, dass** das Nadellager mit einem Kugellager, insbesondere einem Axial-Rillenkugellager oder einem Schrägkugellager kombiniert ist.

## Claims

1. An electric armature disc motor with a rotatably mounted armature disc (9) which is rotatably mounted with respect to a stator (4) and/or a motor housing (1,2,3), wherein one or more thin-ring bearings, cross roller bearings, four-point bearings, needle bearings or angular-contact ball bearings or a combination thereof are provided as the rotational mounting (13) for the armature disc (9), and the motor housing (1,2,3) is in the shape of an open housing cup with a circumferential wall (28) parallel to the axis of rotation (26) of the motor and with a base part (29) transversely to the motor axis of rotation (26), and the housing cup opening is bounded by an inner ring of the rotational mounting (13), and the armature disc (9) is provided with an outwardly facing or outwardly accessible end face (17), **characterised in that** the armature disc (9) is accommodated within the inner ring of the rotational mounting, wherein its outer edge (27) abuts firmly against the rotatable inner ring and on its outwardly facing end face (17) has an eccentrically arranged output projection (21) or an eccentrically arranged output shaft in each case for a semirotary actuator.

2. A motor according to Claim 1, **characterised by** the provision of a single rotational mounting (13) with an outer ring located on the motor housing (1,2,3) and a rotatable inner ring, by which the armature disc (9) is enclosed.

3. A motor to Claim 1 or 2, **characterised in that** the armature disc (9) has a centrally mounted driven shaft on its outwardly facing end face (17).

4. A motor to any one of the preceding Claims,
**characterised in that** the armature disc (9) has on its outwardly facing end face (17) an eccentrically mounted bar-code segment (25) which extends in the manner of a circular arc and which is associated with a reading member (24) of an angle position transducer (22) supported stationarily preferably on the motor housing (1,2,3).

5. A motor to any one of the preceding Claims, **characterised in that** the armature disc (9) is provided with a plurality of permanent magnets (11) on its end face adjoining an air gap (16) to the stator (4).

6. A motor to any one of the preceding Claims, **characterised in that** the four-point bearing is in the form of a thin ring bearing.

7. A motor to any one of the preceding Claims, **characterised in that** the needle bearing is combined with a ball bearing, in particular an axial deep-groove ball bearing or an angular-contact ball bearing.

## Revendications

1. Moteur électrique à rotor en forme de disque avec disque de rotor (9) monté en rotation, qui est logé de façon rotative par rapport à un stator (4) et/ou un carter de moteur (1, 2, 3), un ou plusieurs paliers annulaires minces, roulements à billes en croix, paliers à quatre points, roulements à aiguilles ou roulements à billes obliques ou une combinaison de ces paliers ou roulements étant disposés comme logement pivotant (13) pour le disque de rotor (9), et le carter de moteur (1, 2, 3) présentant la forme d'un pot de carter ouvert avec une paroi d'enveloppe (28) parallèle à l'axe de rotation du moteur (26) et une partie de sol (29) transversale à l'axe de rotation du moteur (26), et l'ouverture du pot de carter étant délimitée par une bague intérieure du logement pivotant (13), et le disque de rotor (9) étant disposé avec un côté avant (17) dirigé vers l'extérieur ou accessible par l'extérieur, **caractérisé en ce que** le disque de rotor (9) est réceptionné dans la bague intérieure de palier rotatif, est appuyé ici de façon fixe avec son bord extérieur (27) contre la bague intérieure rotative et présente sur son côté avant (17) dirigé vers l'extérieur une saillie de sortie (21) disposée de façon excentrée ou un arbre de sortie disposé de façon excentrée prévu respectivement pour un mécanisme de basculement.

2. Moteur selon la revendication 1, **caractérisé par** la disposition d'un unique logement pivotant (13) avec une bague extérieure fixée sur le carter de moteur (1, 2, 3) et une bague intérieure pivotante, par laquelle le disque de rotor (9) est entouré.

3. Moteur selon la revendication 1 ou 2, **caractérisé en ce que** le disque de rotor (9) présente un arbre de sortie disposé de façon centrée sur son côté avant (17) dirigé vers l'extérieur.

4. Moteur selon l'une quelconque des revendications précédentes, **caractérisé en ce que** le disque de rotor (9) présente sur son côté avant (17) dirigé vers l'extérieur un segment de code barre (25) disposé de façon excentrée et agencé en forme d'arc de cercle, qui est attribué à un organe de lecture (24), soutenu localement de préférence sur le carter de moteur (1, 2, 3), d'un capteur.d'angle (22).

5. Moteur selon l'une quelconque des revendications précédentes, **caractérisé en ce que** le disque de rotor (9) porte plusieurs aimants permanents (11) sur son côté avant contigu à un entrefer (16) par rapport au stator (4).

6. Moteur selon l'une quelconque des revendications précédentes, caractérisé ce que le palier à quatre points est réalisé comme un palier à bague mince.

7. Moteur selon l'une quelconque des revendications précédentes, **caractérisé en ce que** le palier à aiguilles peut être combiné avec un roulement à billes, en particulier une butée à rainure à billes ou un roulement à billes oblique.
